# EUROPEAN PATENT APPLICATION

(11) **EP 2 039 651 A1**
(43) Date of publication of application: **25.03.2009**
(21) Application number: 07745427.0
(22) Date of filing: 15.06.2007
(51) Int. Cl.: C01B 3/08, C22C 1/02, C22C 11/00, C22C 11/08, C22C 12/00, C22C 13/00, C22C 18/00, C22C 21/00, C22C 21/10

(54) **HYDROGEN GENERATING METHOD, HYDROGEN GENERATING ALLOY AND METHOD FOR MANUFACTURING HYDROGEN GENERATING ALLOY**

(30) Priority: 05.07.2006 JP 2006185857
(71) Applicant: ITOH, Isao, Ota-shi, Gunma 373-0806 (JP); Central Glass Company, Limited, Yamaguchi 755-0001 (JP)
(72) Inventor: ITOH, Isao, Gunma 373-0806 (JP)
(74) Representative: HOFFMANN EITLE
(86) International application number: PCT/JP2007/062173
(87) International publication number: WO 2008/004428

(57) **Abstract**

An alloy generating hydrogen easily and safely for a long time is obtained. The alloy is obtained by melting in a blast furnace a first metal composed of one or more metals of Al, Zn and Mg and a second metal composed of one or more metals of Ga, Cd, In, Sn, Sb, Hg, Pb and Bi; and then placing the alloy in a molten state in water to cool the alloy.

## Description

### TECHNICAL FIELD

The present invention relates to a hydrogen generating method, and an alloy used therefor which generates hydrogen gas in contact with water and a method for producing the alloy.
More particularly, the present invention relates to a hydrogen generating method which may generate hydrogen gas highly easily and safely and stably for a long time as compared with the related art, a hydrogen generating alloy used for the generation method, and a method for producing the same.

### BACKGROUND ART

Fuel cells have attracted attention as next generation low-pollution energy sources. Because fuel cells use hydrogen as an energy source, methods for generating a large amount of hydrogen gas safely have been actively researched.
A method of obtaining hydrogen gas by activating aluminum and reacting it with water has been attracted attention as a hydrogen generating method.

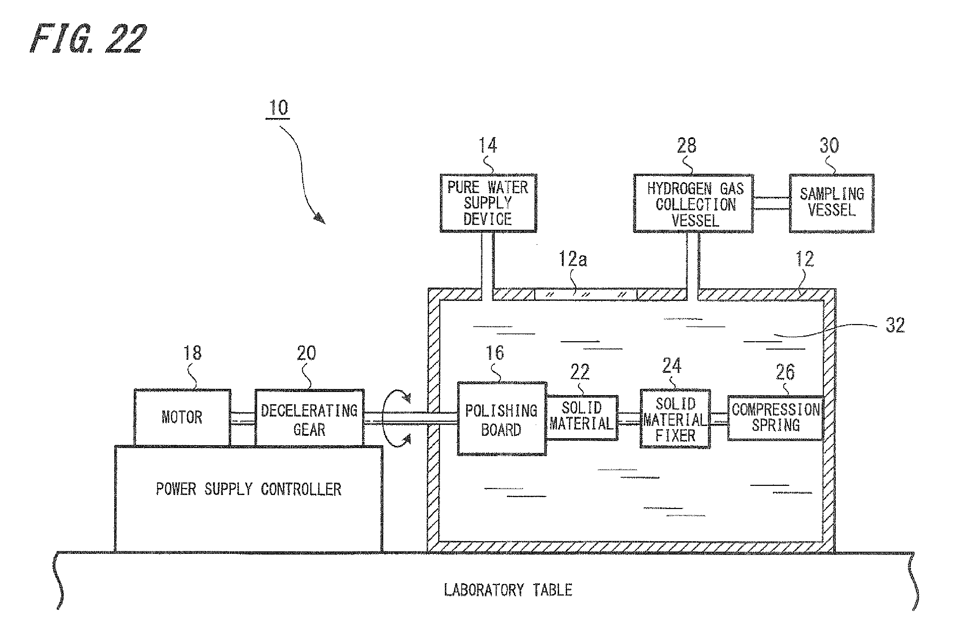

There will be described with reference to FIG. 22 an example of a hydrogen gas production apparatus of the related art which is disclosed in Patent Document 1. The hydrogen gas production apparatus denoted by Reference Numeral 10 in its entirety in FIG. 22 includes a reaction vessel 12 formed of a synthetic resin material having high water resistance. The reaction vessel 12 is filled with pure water 32. The hydrogen gas production apparatus 10 also includes a pure water supply device 14 supplying the pure water 32 to the reaction vessel 12. The reaction vessel 12 has an observation window 12a provided for observing the inside thereof.

A polishing board 16 formed of a ceramic material is placed within the reaction vessel 12. The polishing board 16 is configured to be rotated by an electric motor 18. Reference Numeral 20 denotes a gear change decelerator (decelerating gear). In the reaction vessel 12, a solid material 22 is fixed by a solid material fixer 24. The solid material 22 is pressed toward the polishing board 16 by a compression spring 26.
The hydrogen gas production apparatus 10 further includes a hydrogen gas collection vessel 28 for collecting the produced hydrogen gas; and a sampling vessel 30.
Aluminum or an aluminum/silicon alloy is used as the solid material 22.
According to the hydrogen gas production apparatus 10, generation of hydrogen gas from aluminum is started simultaneously with the start of friction movement, and the generated hydrogen gas is accumulated as bubbles in the upper part of the reaction vessel 12.
Patent Document 1: Japanese Unexamined Patent Application Publication No. 2004-123517
Patent Document 2: Japanese Examined Patent Application Publication No. 7-62198
Patent Document 3: Japanese Unexamined Patent Application Publication No. 2005-162552
Patent Document 4: Japanese Unexamined Patent Application Publication No. 2002-161325
Patent Document 5: Japanese Unexamined Patent Application Publication No. 2003-12301

### DISCLOSURE OF THE INVENTION

In the invention disclosed in Patent Document 1, hydrogen gas is generated by abrading aluminum in water by rotating and driving a polishing board in contact with the aluminum using an electric motor, with a strong force applied by a compression spring. This technique may exhibit stable performance as a technique of generating hydrogen gas by reacting aluminum with water, where aluminum originally may not be easily reacted with water.
However, as may be seen at a glance, the apparatus is large-scaled.

Patent Document 2 discloses a method for generating a hydrogen generating alloy by spraying an alloy obtained by melting Al and Bi over the surface of a water-cooled copper roll. In this method, a thin film alloy is formed to have a thickness of about 0.03 to 0.1 mm. In this method, the amount of the resulting metal is relatively small despite the large-scaled apparatus, the metal is a thin film and therefore may be handled with some difficulty, and it may not be expected that hydrogen gas be continuously generated for a long time.

The present invention has been made in view of the aforementioned points. An object of the present invention is to provide a hydrogen generating method which may generate hydrogen gas highly easily and safely and stably for a relatively long time, and a hydrogen generating alloy used therefor and a method for producing the same.

The hydrogen generating method according to the present invention for solving the aforementioned problem is characterized in that an alloy obtained by melting and solidifying a first metal containing one or more of Al, Zn and Mg and a second metal difficult to form a solid solution with the first metal, is allowed to be in contact with water..

The hydrogen generating alloy according to the present invention for solving the aforementioned problem is characterized in that the alloy includes a first metal containing one or more of Al, Zn and Mg; and a second metal difficult to form a solid solution with the first metal, and a hydroxide derived from the first metal and the second metal are exposed on the surface.

It is well-known that aluminum as it is forms a thin oxide film on the surface thereof, maintains an inert state and is not reacted with water.
The inventor has found that when molten aluminum and a low-melting metal having a melting point of 100°C or less and being difficult to form a solid solution with aluminum are melted and the alloy is placed in water, the low-melting metal is maintained to be molten for about several seconds, and aluminum is also reacted with water and dissolved to generate hydrogen gas continuously while generating a hydroxide.
The inventor has also found that when another metal difficult to form a solid solution with aluminum is blended into molten aluminum and the generated alloy is placed in water, a thin aluminum hydroxide layer is formed on the surface, and aluminum is directly reacted with water and dissolved to generate hydrogen gas continuously while generating a hydroxide.
It has also been found in an experiment that water must be used for cooling the alloy.

According to the present invention, a hydrogen generating alloy may be realized which starts reaction only in contact with water, continuously generates hydrogen gas stably for a long time, and is easily handled.
According to the present invention, the hydrogen generating alloy may be produced highly easily and safely.
According to the present invention, a highly easily handled and safe hydrogen generating method may be realized using the hydrogen generating alloy.

### BRIEF DESCRIPTION OF THE DRAWINGS

FIG. 1 is a view describing a process for generating a hydrogen generating alloy according to an embodiment of the present invention.
FIG. 2 is a graph showing the relation between the reduction in weight and the treatment time in 1 g of a hydrogen generating alloy in hot water at 100°C.
FIG. 3 is a graph showing the relation between the percentage of the remaining aluminum and the treatment time in a hydrogen generating alloy in hot water at 100°C.
FIG. 4 is a graph showing the relation between the water temperature and the reaction rate in alloys of a 90°C low-melting alloy and aluminum having different composition ratios.
FIG. 5 is a photograph of a hydrogen generating alloy composed of a 90°C low-melting alloy and aluminum.
FIG. 6 is a magnified electron microscope photograph of a hydrogen generating alloy composed of a 90°C low-melting alloy and aluminum.
FIG. 7 is a magnified electron microscope photograph of an alloy composed of a 90°C low-melting alloy and aluminum.
FIG. 8 is a magnified electron microscope photograph of a hydrogen generating alloy composed of a 90°C low-melting alloy and aluminum.
FIG. 9 is a magnified electron microscope photograph of an alloy composed of a 90°C low-melting alloy and aluminum.
FIG. 10 is a magnified electron microscope photograph of a hydrogen generating alloy composed of a 90°C low-melting alloy and aluminum.
FIG. 11 is a magnified electron microscope photograph of a hydrogen generating alloy composed of a 90°C low-melting alloy and aluminum.
FIG. 12 is a magnified electron microscope photograph of a hydrogen generating alloy composed of a 90°C low-melting alloy and aluminum.
FIG. 13 is a graph showing the relation between the water temperature and the reaction rate in alloys of a low-melting alloy and aluminum or zinc having different composition ratios.
FIG. 14 is a graph showing the relation between the water temperature and the reaction rate in alloys of tin and aluminum or magnesium having different composition ratios.
FIG. 15 is a magnified electron microscope photograph of a hydrogen generating alloy composed of tin, aluminum and magnesium.
FIG. 16 is a magnified electron microscope photograph of an alloy composed of tin, aluminum and magnesium.
FIG. 17 is a graph showing the relation between the water temperature and the reaction rate in alloys of tin, bismuth, lead or cadmium and aluminum or magnesium having different composition ratios.
FIG. 18 is a magnified electron microscope photograph of a hydrogen generating alloy composed of bismuth and aluminum.
FIG. 19 is a magnified electron microscope photograph of an alloy composed of bismuth and aluminum.
FIG. 20 is a graph showing the elapsed time and the change in the rate of hydrogen generation after a hydrogen generating alloy composed of a 90°C low-melting alloy and aluminum is made into powder and then the powder is left to stand for a predetermined time.
FIG. 21 is a graph showing the elapsed time and the change in the rate of hydrogen generation in a hydrogen generating alloy composed of a 90°C low-melting alloy and aluminum which is air-cooled and powdered and such an alloy which is water-cooled and powdered. The figure is a schematic view showing a hydrogen gas production apparatus of the related art.
FIG. 22 is a schematic view showing a hydrogen gas production apparatus of the related art.

### BEST MODE FOR CARRYING OUT THE INVENTION

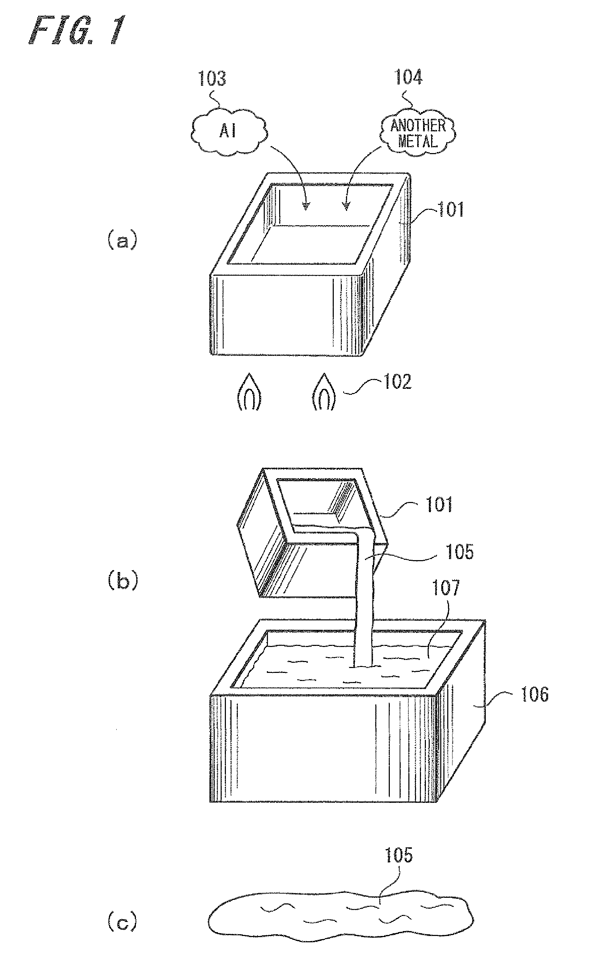

Embodiments of the present invention will be described below with reference to FIGS. 1 to 19.

### [Table of contents]

Embodiments of the present invention will be described in the following order.
1. Method for producing hydrogen generating alloy
2. Combinations of alloy materials
2.1. Alloy of 90°C low-melting alloy and Al
2.2. Alloy of low-melting alloy, Al and Zn
2.3. Alloy of Sn, Al and Mg
2.4. Alloy of Al and metal not forming solid solution with Al
2.5. Alloy of Mg and metal not forming solid solution with Mg
3. Characteristics of hydrogen generating alloy
4. Applications

### [1. Method for producing hydrogen generating alloy]

FIGS. 1(a), 1(b) and 1(c) are views showing steps of a method for producing a hydrogen generating alloy according to an embodiment of the present invention. In the present embodiment, an alloy stable at ordinary temperature and generating hydrogen gas in contact with water is called hydrogen generating alloy.
FIG. 1(a) shows a first step of the production method.
A blast furnace 101 is heated by flame 102 emitted from a burner (not shown) to a temperature of 660°C or more at which aluminum (hereinafter "Al") 103 may be molten. The Al 103 and another metal 104 are placed in the blast furnace 101 to melt both materials. An alloy 105 of the Al and another metal (hereinafter "Al alloy") is generated in this manner.
When another metal 104 has a melting point higher than that of the Al 103, the blast furnace 101 must be heated at a temperature higher than the melting point of another metal 104.

FIG. 1(b) shows a second step of the production method.
The molten Al alloy 105 is placed in a water tank 106 filled with water 107. The Al alloy 105 is rapidly cooled and solidified in contact with the water 107. The Al alloy 105 is reacted with the water 107 to generate hydrogen gas in the process of solidification. The Al alloy 105 is preferably withdrawn from the water tank 106 immediately after solidification, since the alloy may be directly reacted with the water 107 and dissolved when left to stand for a long time. Because solidification of a hydrogen generating alloy is rapidly completed, the alloy is preferably withdrawn in about several seconds immediately after confirming that the alloy is solidified in contact with water. The solidified Al alloy 105 as shown in FIG. 1(c) is formed in this manner.
The above is the whole process of generating a hydrogen generating alloy.
Although the generation process is much simplified as compared to that of the related art, a hydrogen generating alloy may be produced at a high reproduction rate of about 100% in the generation process according to the present embodiment.

The aforementioned process for producing a hydrogen generating alloy according to the present embodiment will be described below in detail.
The heating and melting process corresponding to the first step may not have to be carried out in a special atmosphere. Although heating in a technique of the related art (Patent Document 3) is performed in an atmosphere under reduced pressure so as to avoid oxidation, such a special environment is not needed in the present embodiment. Heating and melting has only to be performed in normal air.
It is also not necessary to perform pretreatment such as powdering or grinding of a material and subsequent stirring, when melting the material.
Further, the purity of the material may not be strictly determined. For example, an empty aluminum can washed with water and dried may be used as it is and put into a blast furnace.

The cooling process corresponding to the second step must be performed using water.
Rapid cooling is disclosed in the related art. For example, Patent Document 2 discloses a method for generating a hydrogen generating alloy by spraying an alloy obtained by melting Al and Bi over the surface of a water-cooled copper roll. However, even if a hydrogen generating alloy is generated by placing a molten Al alloy in a solvent other than water and solidifying it, assuming that the alloy may be cooled, the hydrogen generating alloy generated in this manner may not generate hydrogen gas easily when merely being in contact with water.

Pure water is not necessarily required.
Generally used tap water containing a slight amount of impurities is sufficient.
As disclosed in the related art (Patent Document 3), the reaction rate of the hydrogen generating alloy is higher as the water temperature is higher.
Although Al may be solidified at any water temperature, cold water is preferable if possible, because the hydrogen generating reaction rapidly proceeds if the water temperature is high.

It is not clear why the generated alloy exhibits significant hydrogen gas generating performance when cooled with water, and why the generated alloy may not exhibit significant hydrogen gas generating performance when cooled with a cooling solvent other than water. This is because the precise reaction mechanism has not been analyzed in detail at present.
It may be visually observed that chemical reaction between Al and water to generate a hydroxide on the surface proceeds simultaneously with the cooling and solidification process in which the molten Al alloy is placed in water.
It may also be assumed that the alloy cooled and solidified generates minute voids due to the difference in coefficient of expansion between Al and another metal when the molten Al alloy is rapidly cooled by being placed in water.
A large number of minute holes are generated on the surface of the alloy cooled and solidified in water, although it is not certain whether this is caused by either or both of the abovedescribed effects or other effects not determined. Since the surface is covered with the hydroxide, the alloy is not shiny as usual metal and is stony gray.
When the alloy is placed in water, the water is in contact with the Al surface and the reaction is started.
Usually, pure Al metal forms an oxide film on the surface thereof and the film prevents reaction thereafter. However, when the pure Al metal is made into an alloy and then placed in water, the alloy is cooled and solidified; when the mass of the alloy is in contact with water again, reaction with water (hereinafter "hydration") is started again.
The above is the observation results from the visible appearance.

An assumption resulting from the aforementioned visual observation will be described.
Al and another metal not forming a solid solution with Al are present together in a pulverized state on the alloy surface, and the surface is further covered with an aluminum hydroxide film. When water is in contact therewith, Al is hydrated to form a hydroxide, presumably because the water permeates the aluminum hydroxide film, or because water enters a void formed between the Al and another metal, or because of a completely different mechanism.
In the hydration process, the aluminum hydroxide film is mechanically weakly broken, and the Al metal surface is exposed from the broken surface and in contact with water to cause hydration. Thereafter, contact between the exposed Al metal surface and the water continues as chain reaction, and hydration continues.

An alloy including a low-melting metal having a melting point of 100°C or less as a main component and about 10% or less of Al may not in particular have to be placed in water and quenched in the cooling process.
When placed in hot water at 100°C, the alloy generates hydrogen gas similarly to a water quenched alloy.
In this mechanism, presumably, Al covered with the low-melting metal in the alloy is not oxidized, the low-melting metal is melt and the Al metal surface is emerged when dissolving the alloy in hot water, and the Al metal surface is in contact with water to cause hydration, so that hydrogen may be generated.

As described above, the reaction mechanism has not been clarified precisely at present due to limitations on the experimental equipment and time. However, there will be listed and disclosed below the data of experiments carried out until now, the results of observing the generated hydrogen generating alloys, and the like to prove that the present embodiment is not a fantasy.

### [2. Combinations of alloy materials]

Materials for the hydrogen generating alloy will be described.
The following combinations are possible for the materials of the alloy generating hydrogen gas.
(1) Combination of Al and metal difficult to be molten with Al
The metal difficult to be molten with Al, which is another metal 104, is a metal material separated from Al even when stirred in a molten state and may not form a complete alloy, as if Al is water and the metal is oil. Such metals forming an alloy with Al include Ga, Cd, In, Sn, Sb, Hg, Pb and Bi.
"Another metal" may be a single metal or a combination of a plurality of metals. The metal is suitably a low-melting alloy having a melting point of 90°C (hereinafter "90°C low-melting alloy") which is an alloy of Sn: 8.7%, Bi: 56%, Cd: 6.4% and Pb: 28.9%, for example.
When the percentage of Al is about 98% or less based on Al and another metal, the alloy may exhibit properties as the hydrogen generating alloy according to the present embodiment. That is, it has been found from an experiment that pure Al is unusable, and when the alloy includes at least 2% of another metal, the alloy may react with water to generate hydrogen gas through the aforementioned rapid cooling process using water. On the contrary, if the alloy contains 1% or more of Al, it reacts with water and generates hydrogen gas only in contact with water.
The details for the reaction of the alloy will be described later.

(2) Combination of Al, metal which may react with water and metal difficult to be molten with Al
The combination includes 5% of Zn, 1% of Al and the balance of a 90°C low-melting alloy.
Although Zn is a metal which may generate a hydroxide, single Zn may not be reacted with water at normal temperature, and an alloy of Zn and a low-melting metal also may not be reacted with water. However, Zn is reacted intensively with water when mixed with a slight amount of Al.
The details for the reaction of the alloy will be described later.

[2.1. Alloy of 90°C low-melting alloy and Al]
The low-melting alloy is excellently hydrated, presumably because the alloy is difficult to form a solid solution with Al and is dissolved by heat generated by hydration.

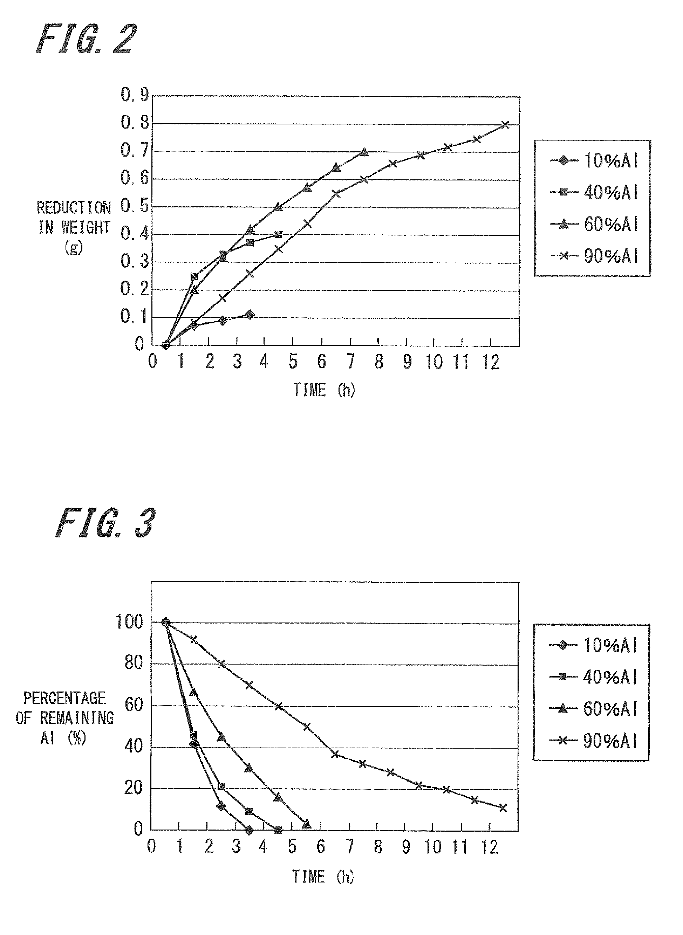

FIG. 2 is a graph showing the change in weight of alloys of a 90°C low-melting alloy and Al having varied Al mixing ratios when in contact with hot water at 100°C. All alloys shown in the graph are subjected to water cooling in FIG. 1(b) after melting in FIG. 1(a).
After preparing 1 g in total of the hydrogen generating alloy, the degree of reaction is determined by measuring the weight. The production method is obviously as described above in FIG. 1.
"10% Al" indicates that the hydrogen generating alloy includes 10% of Al The reaction is completed in a short time since the hydrogen generating alloy contains only 10% of Al. It is found in FIG. 1 that the reaction is completed in about three hours.
As the percentage of Al is increased to 40% and further to 60%, the time necessary for the reaction increases and the weight is increasingly reduced, obviously. When the percentage of Al reaches 90%, the reaction continues even after 12 hours.
However, since the reaction curves of all alloys having the aforementioned ratios are almost similar, the percentage of Al is presumably not so strongly related with the reaction rate.

As shown in FIG. 2, the final reduction in weight of the 60% Al alloy is 0.7 g which is larger than 0.6 g as originally estimated as the final reduction in weight. This is presumably because the weight is further reduced as a result of progress of the reaction for the low-melting alloy component in the process of hydrogen generating reaction.

FIG. 3 is a graph showing the change in the percentage of the remaining Al in alloys of a 90°C low-melting alloy and Al having varied Al mixing ratios when in contact with hot water at 100°C. The change is calculated from the values in the graph of FIG. 2. From this it is found that the reaction time is long as the percentage of Al in the hydrogen generating alloy is increased.

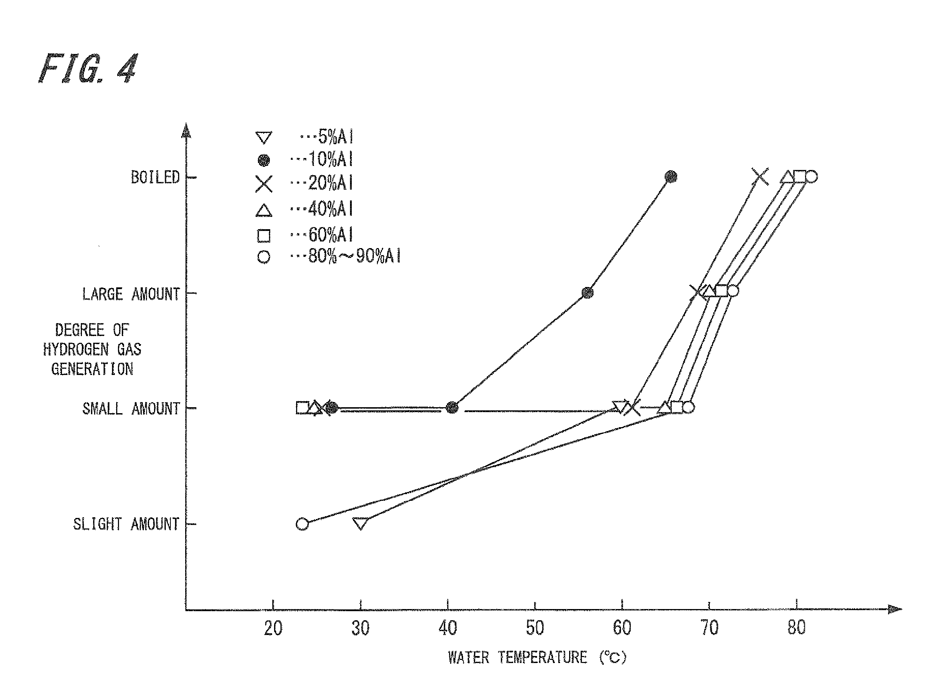

FIG. 4 is a graph representing the degree of reaction in alloys of a 90°C low-melting alloy and Al having varied Al mixing ratios when in contact with water at different temperatures. With regard to the degree of reaction, there are roughly four classes of the amount of hydrogen gas generated per unit time. All alloys shown in the graph are subjected to water cooling in FIG. 1(b) after melting in FIG. 1(a).
As shown in this graph, when the percentage of Al is 20% or more and 60% or less, there is approximately the same correlation between the temperature and the degree of hydration, a small amount of hydrogen gas is generated when the temperature reaches about 25°C, and the degree of reaction is increased in accordance with a rise in temperature when the temperature exceeds about 60°C.
It is found that the reaction proceeds at a lower temperature when the percentage of Al is 10%.

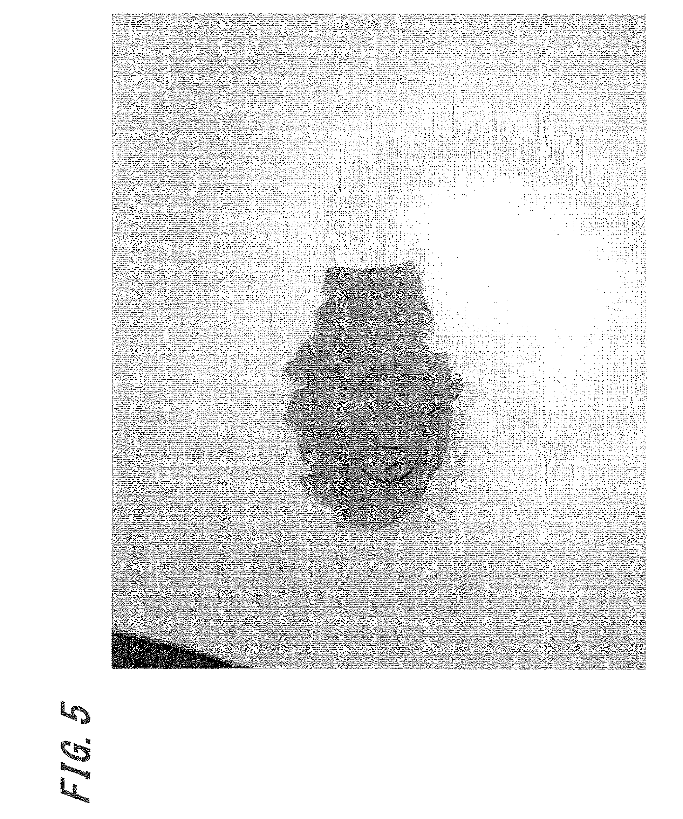

FIG. 5 is a photograph of an appearance of alloy of 90% of Al and a 90°C low-melting alloy. The alloy shown in the photograph is also subjected to water cooling in FIG. 1(b) after melting in FIG. 1(a).
The alloy molten at a high temperature of 660°C or more is rapidly cooled by placing it in water and therefore has an amorphous shape. Since the ally is rapidly cooled and aluminum hydroxide is formed on the surface, the surface of the alloy is not shiny as compared to usual metal and is stony gray.
Hydration is started simultaneously with placing the alloy in water and innumerable holes are generated on the alloy surface, although this may not be visually observed in FIG. 5. Each hole has a size of about 50 µm to 500 µm. As the hydration proceeds, the hole has an increased diameter and depth in the alloy, and the alloy becomes porous like pumice. In such a state, when one end of the alloy is in contact with water, water is sucked up by capillarity and prevails in the whole alloy. The whole alloy absorbs water and therefore the gray surface becomes darker.

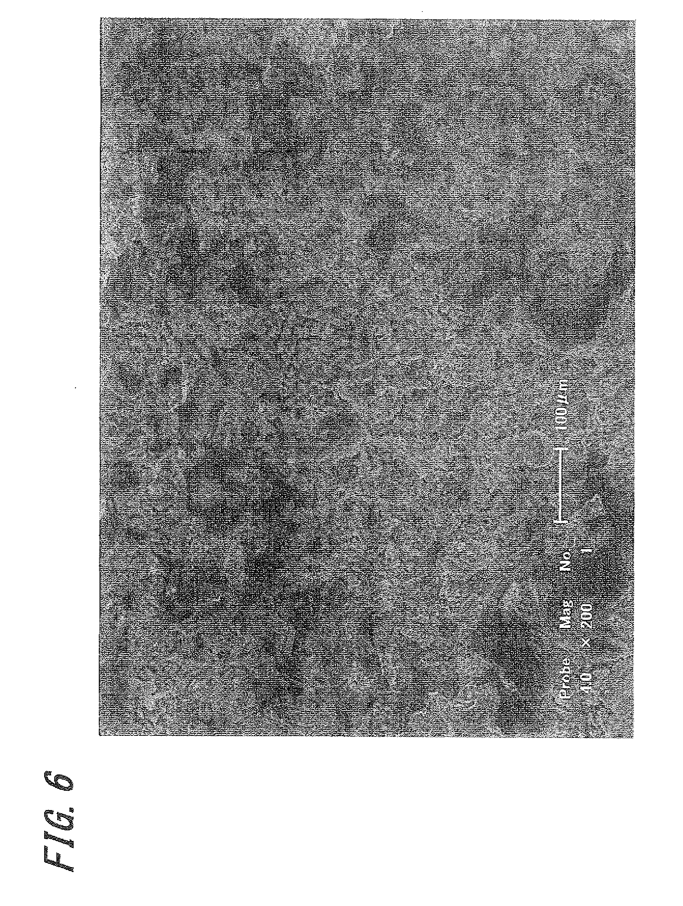

FIG. 6 is a magnified electron microscope photograph of the surface of an alloy of 90% of Al and a 90°C low-melting alloy. The alloy is subjected to water cooling in FIG. 1(b) after melting in FIG. 1(a).
Hereinafter, there will be alternately shown an alloy subjected to water cooling in FIG. 1(b) and an alloy cooled in air without contact with water.
As shown in FIG. 6, dark places each having an area of about several ten square µm are dotted. These are holes. The surface is roughened by hydration.

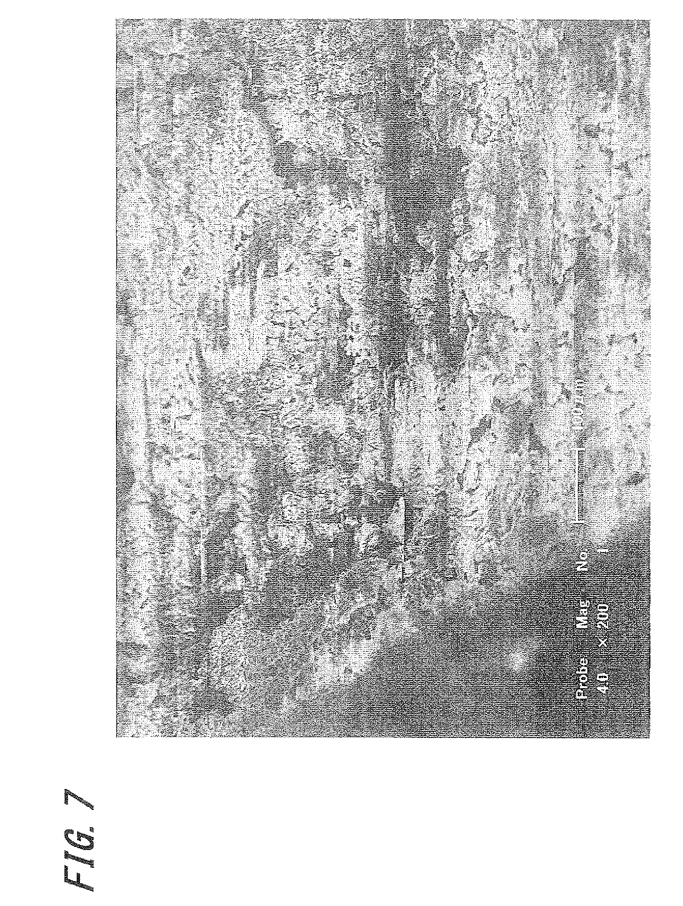

FIG. 7 is a magnified electron microscope photograph of the surface of an alloy of 90% of Al and a 90°C low-melting alloy. The alloy is not subjected to water cooling in FIG. 1(b) but cooled in air after melting in FIG. 1(a).
The presence of some holes may be confirmed, although the number of holes is smaller than in FIG. 6. The holes are generated presumably because of the difference in coefficient of expansion between the 90°C low-melting alloy and Al.

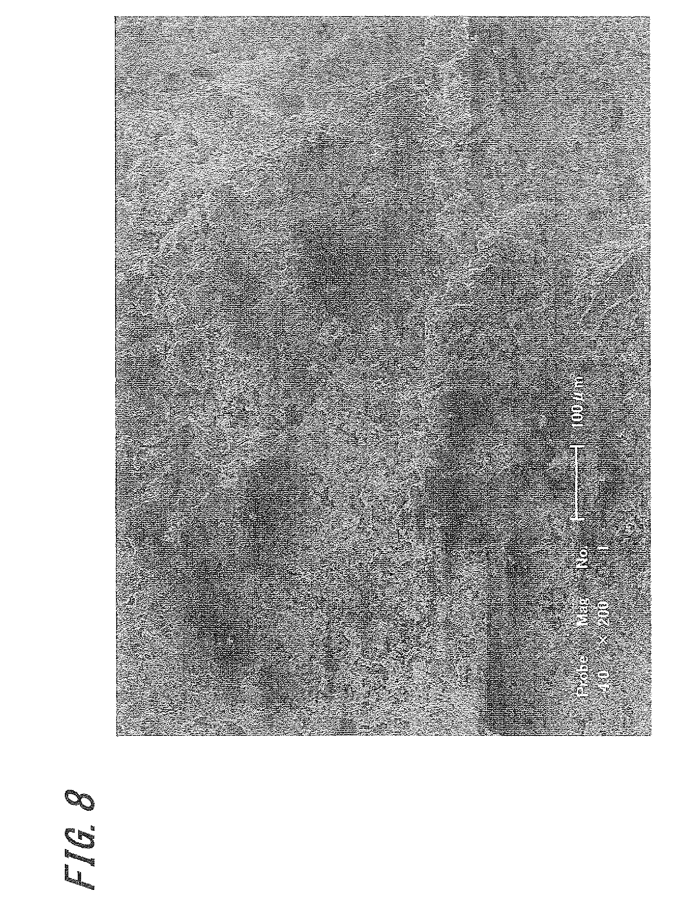

FIG. 8 is a magnified electron microscope photograph of the surface of an alloy of 10% of Al and a 90°C low-melting alloy. The alloy is subjected to water cooling in FIG. 1(b) after melting in FIG. 1(a).
As shown in FIG. 8, dark places each having an area of about 100 square µm are dotted. These are holes formed by hydration in water cooling. It is found that the hole size is larger than that of the 90% Al alloy in FIG. 6. The surface is roughened by hydration.

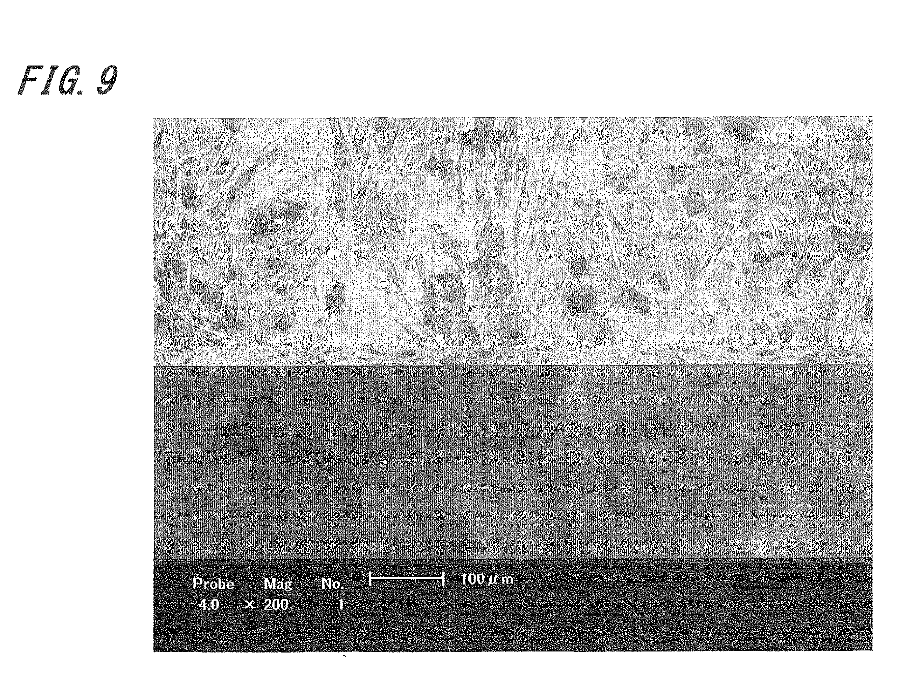

FIG. 9 is a magnified electron microscope photograph of the surface of an alloy of 10% of Al and a 90°C low-melting alloy. The alloy is not subjected to water cooling in FIG. 1(b) but cooled in air after melting in FIG. 1(a). Since the lower half of the image is disturbed during photographing using a scanning electron microscope, please see the well-photographed upper half of the image and the scale in the lower half of the image.
It may be confirmed that almost no holes are present unlike in FIG. 8. It may also be confirmed that hydration is not performed and the surface is not roughened, because the alloy is not water-cooled.
The scanning electron microscope image may be disturbed, because applied electrons are charged up at a non-conducting place in a part of the photographed area, resulting in disturbance of the applied electron beams. Therefore, such a phenomenon tends to increase when photographed at a low magnification.

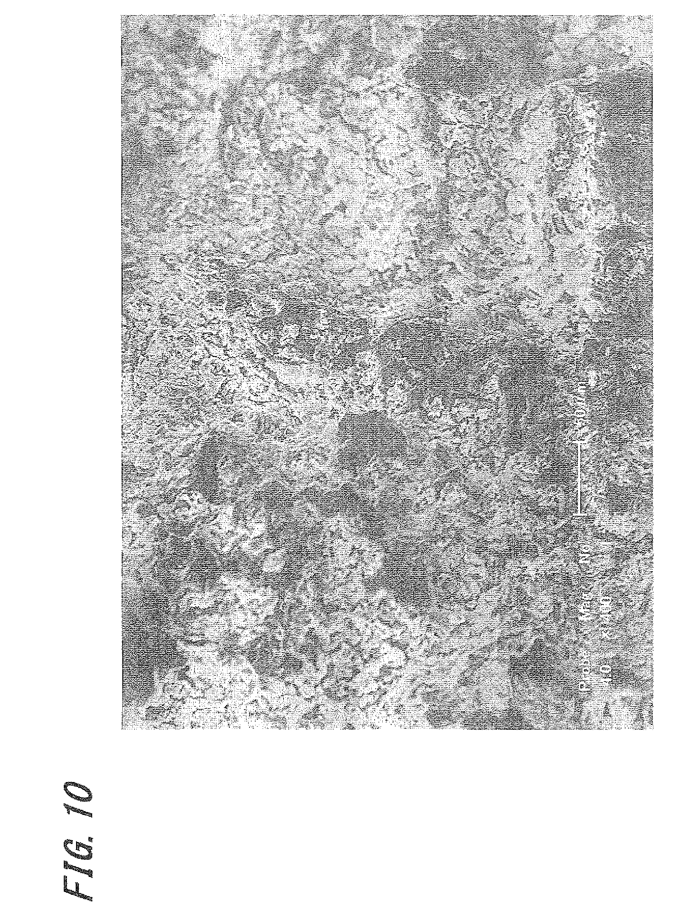

FIG. 10 is a magnified electron microscope photograph of the surface of an alloy of 80% of Al and a 90°C low-melting alloy, where hydration is allowed to proceed by placing the alloy in water. The alloy is subjected to water cooling in FIG. 1(b) after melting in FIG. 1(a).
As is clear from FIG. 10, a number of holes are formed.

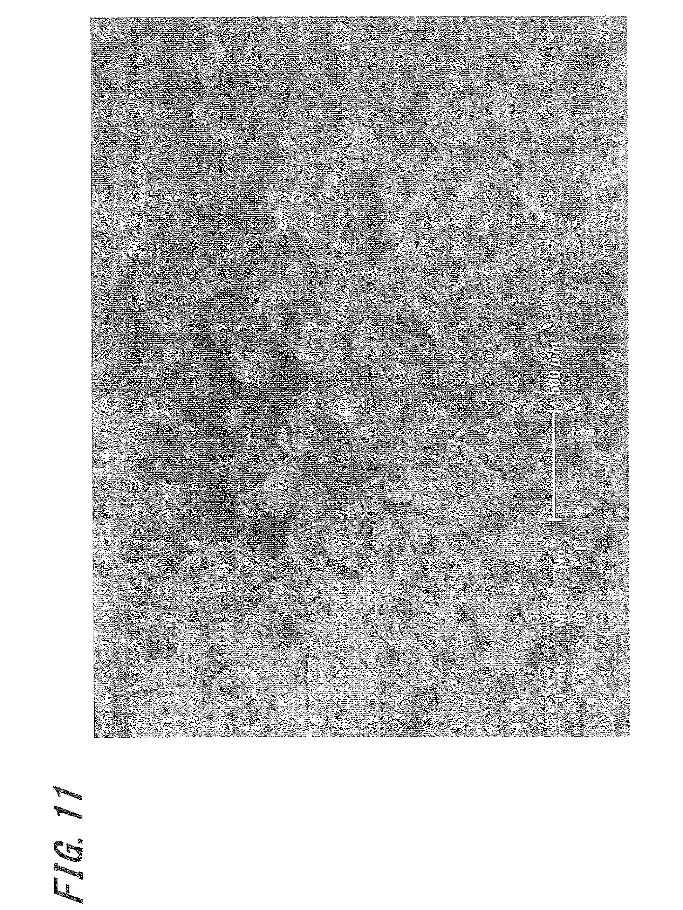

FIG. 11 is a magnified electron microscope photograph of the surface of an alloy of 80% of Al and a 90°C low-melting alloy, where hydration is allowed to proceed by placing the alloy in water. The same material as in FIG. 10 is photographed at an electron microscope magnification reduced to one-tenth that of FIG. 10.
As shown in FIG. 11, dark places each having an area of about 200 to 500 square µm are dotted. These are holes enlarged in hydration. The surface of the holes is roughened by hydration.

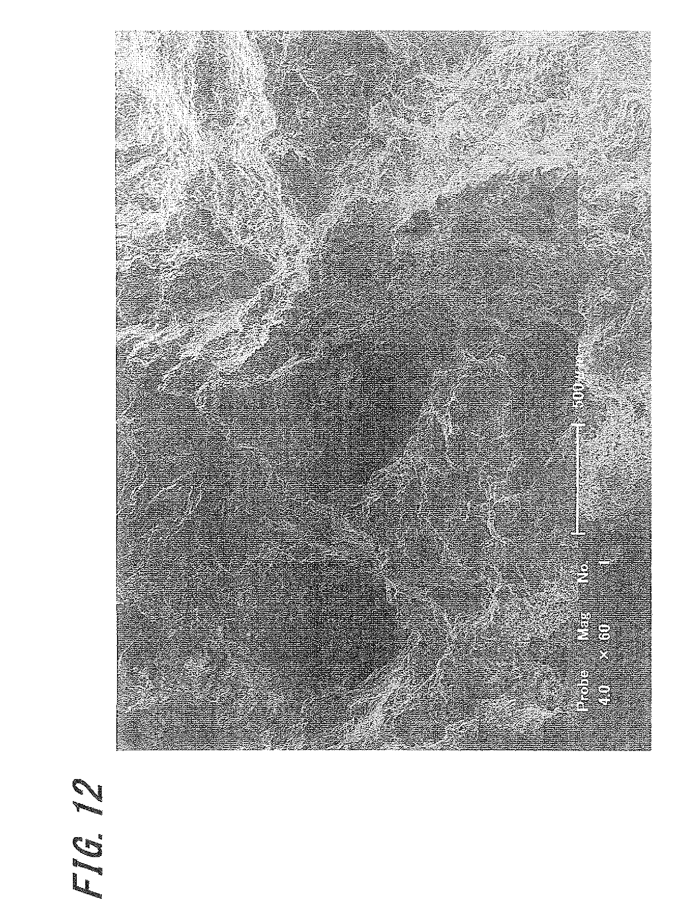

FIG. 12 is a magnified electron microscope photograph of the cross-section of an alloy of 80% of Al and a 90°C low-melting alloy, where hydration is allowed to proceed by placing the alloy in water. The cross-section of the same material as in FIG. 10 is photographed at the same electron microscope magnification as in FIG. 11.
As shown in FIG. 12, dark places each having an area of about 200 to 500 square µm are dotted. These are holes enlarged by hydration. It is found that the holes have an increased depth in the alloy and the alloy has a porous structure.

### [2.2. Alloy of low-melting alloy, Al and Zn]

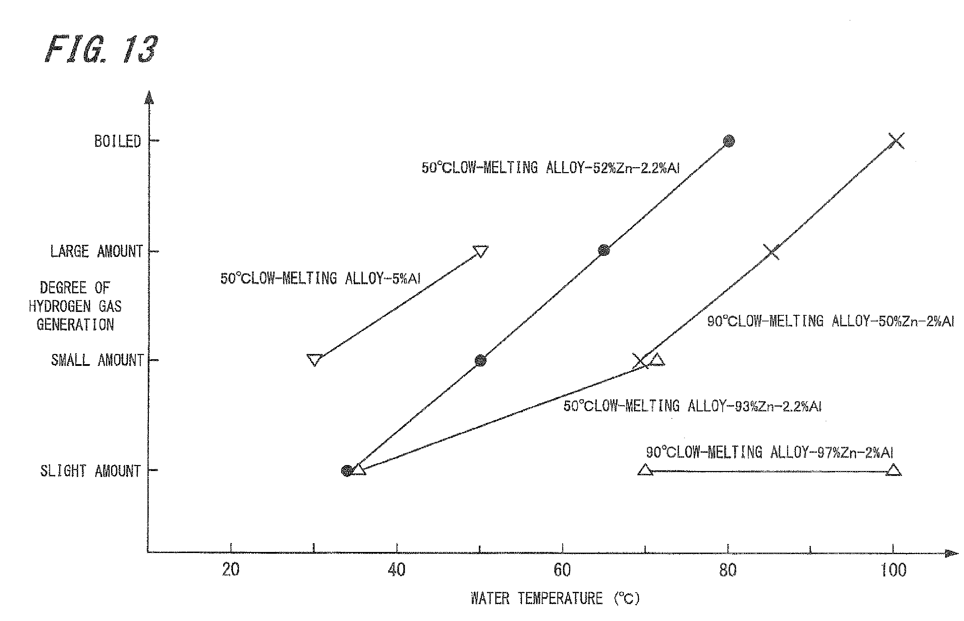

FIG. 13 is a graph representing the degree of reaction in alloys such as those of a low-melting alloy, Al and Zn having various composition ratios when in contact with water at different temperatures. With regard to the degree of reaction, there are roughly four classes of the amount of hydrogen gas generated per unit time. All alloys shown in the graph are subjected to water cooling in FIG. 1(b) after melting in FIG. 1(a).
As shown in FIG. 13, a low-melting alloy of Pb: 37.6%, Bi: 37.2%, In: 11.4%, Sn: 9.1%, Cd: 3.8% and Ga: 0.6% having a melting point of 50°C (hereinafter abbreviated as "50°C low-melting alloy") is used in addition to a 90°C low-melting alloy.
Obviously, single Zn may not generate hydrogen gas even when it is in contact with boiled hot water. An alloy of Zn and a 90°C low-melting alloy also may not generate hydrogen gas even when it is in contact with boiled hot water.
However, when an alloy is prepared using a low-melting alloy and a mixture of Zn and a small amount of Al, the resulting alloy has excellent hydration properties and generates hydrogen gas.
In particular, an alloy with a 50°C low-melting alloy is boiled at about 75°C and is therefore suitable for hydrogen generation.
The necessary activation energy for hydration of Al is known to be smaller than that of Zn. It is assumed that the presence of Al aids hydration of Zn.

The alloy of the 90°C low-melting alloy, 50% of Zn and 2% of Al shown in FIG. 13 will be further described.
When this alloy is placed in hot water at 100°C, hydrogen generating reaction is completed in about four hours, and the remaining weight is only 24% at that time. Accordingly, it is assumed that hydration proceeds not only in Al and Zn but also in Sn, Pb or the like composing the 90°C low-melting alloy.

In an experiment for an alloy of a 90°C low-melting alloy and 2% of Mg, although not shown in FIG. 13, hydrogen generating reaction is completed in about 30 minutes in a state of being placed in hot water at 100°C, and the weight is reduced by 34% at that time. Accordingly, it is assumed that hydration proceeds not only in Mg but also in Sn, Pb or the like composing the 90°C low-melting alloy.

### [2.3. Alloy of Sn, Al and Mg]

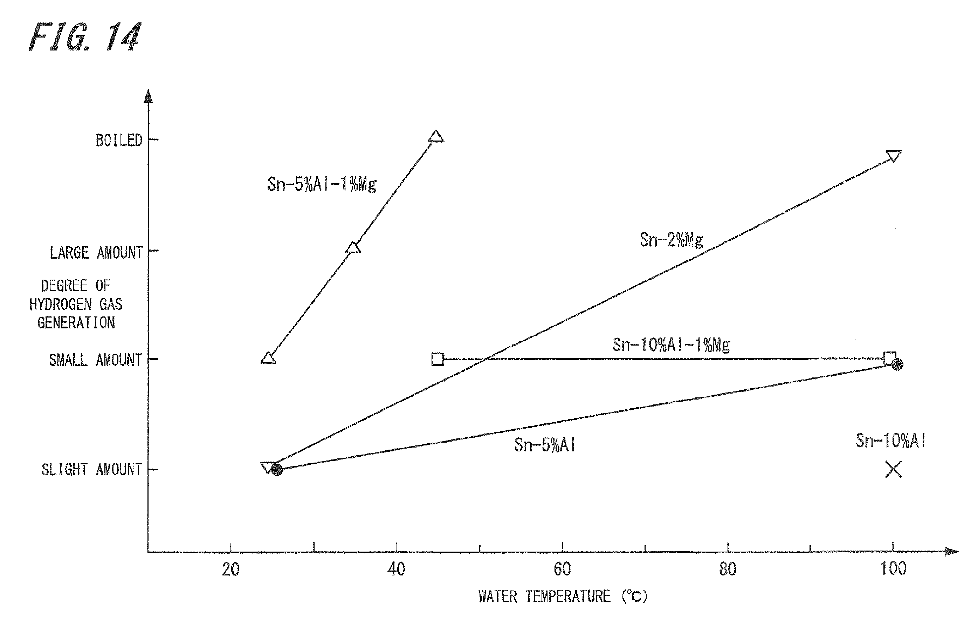

FIG. 14 is a graph representing the degree of reaction in alloys such as those of Sn instead of a low-melting alloy, and Al and Mg having various composition ratios when in contact with water at different temperatures. With regard to the degree of reaction, there are roughly four classes of the amount of hydrogen gas generated per unit time. All alloys shown in the graph are subjected to water cooling in FIG. 1(b) after melting in FIG. 1(a).
Generally, Sn is a little insufficient in terms of efficiency in hydrogen generation as compared to a low-melting alloy.
It is confirmed in FIG. 14 that the alloy having a composition of 5% of Al, 1% of Mg and Sn is vigorously hydrated at a low temperature of about 45°C.
The necessary activation energy for hydration of Mg is known to be smaller than that of Al. It is assumed that the presence of Mg aids hydration of Al.

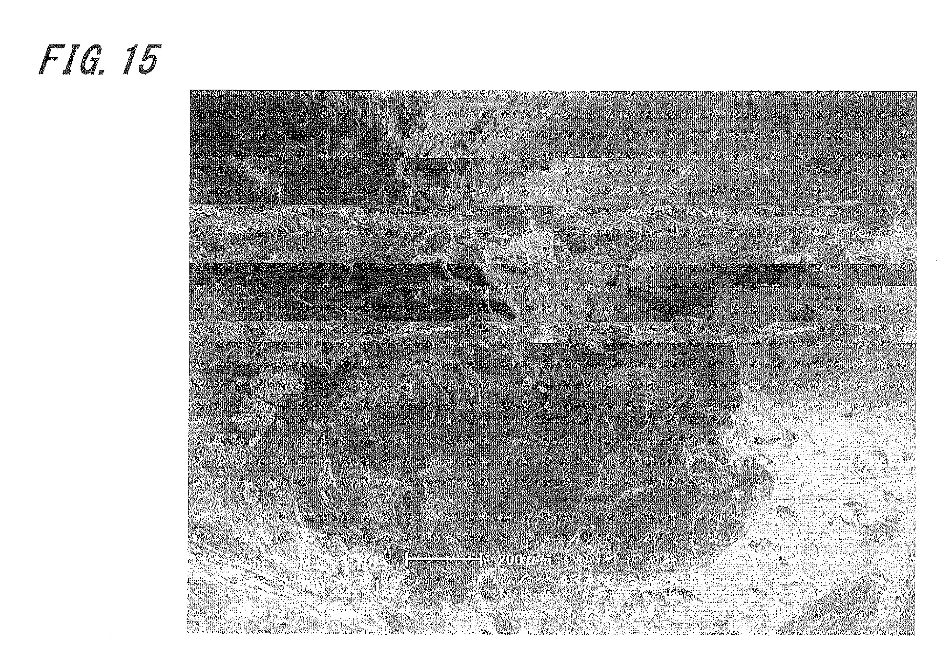

FIG. 15 is a magnified electron microscope photograph of the surface of an alloy of 5% of Al, 1% of Mg and Sn. The alloy is subjected to water cooling in FIG. 1(b) after melting in FIG. 1(a). Since the upper half of the image is disturbed during photographing using a scanning electron microscope, please see the well-photographed lower half of the image.
As shown in FIG. 15, dark places each having an area of about 100 square µm are dotted. These are holes formed by hydration in water cooling. The surface is roughened by hydration.

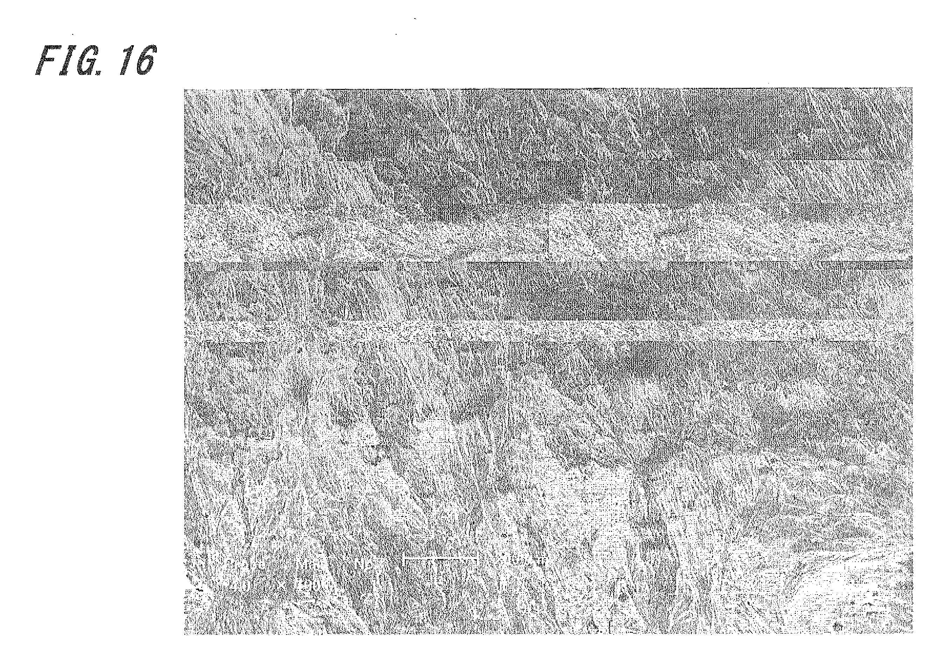

FIG. 16 is a magnified electron microscope photograph of the surface of an alloy of 5% of Al, 1% of Mg and Sn. The alloy is not subjected to water cooling in FIG. 1(b) but cooled in air after melting in FIG. 1(a). Since the upper half of the image is disturbed during photographing using a scanning electron microscope, please see the well-photographed lower half of the image.
It is found that the surface shown in FIG. 16 is less roughened than that in FIG. 15, since hydration due to water cooling may not occur.

### [2.4. Alloy of Al and metal not forming solid solution with Al]

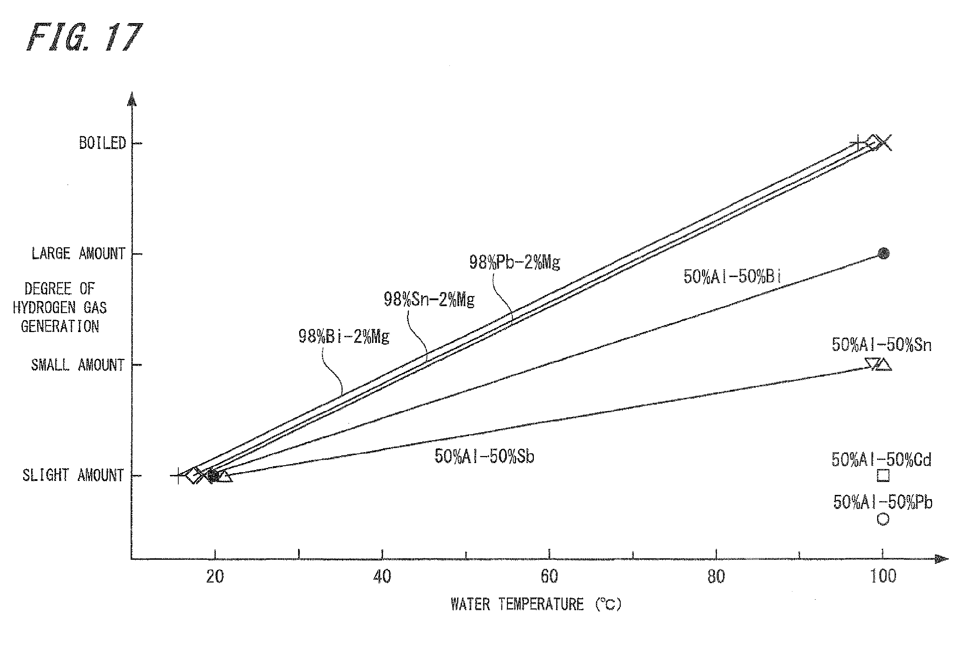

FIG. 17 is a graph representing the degree of reaction in alloys of Al and various kinds of metals not forming a solid solution with Al, which are prepared to have the same composition ratio, when in contact with water at different temperatures. With regard to the degree of reaction, there are roughly four classes of the amount of hydrogen gas generated per unit time. All alloys shown in the graph are subjected to water cooling in FIG. 1(b) after melting in FIG. 1(a).
As is clear from FIG. 17, the alloy of 50% of Bi and 50% of Al has the most suitable hydrogen generating properties.

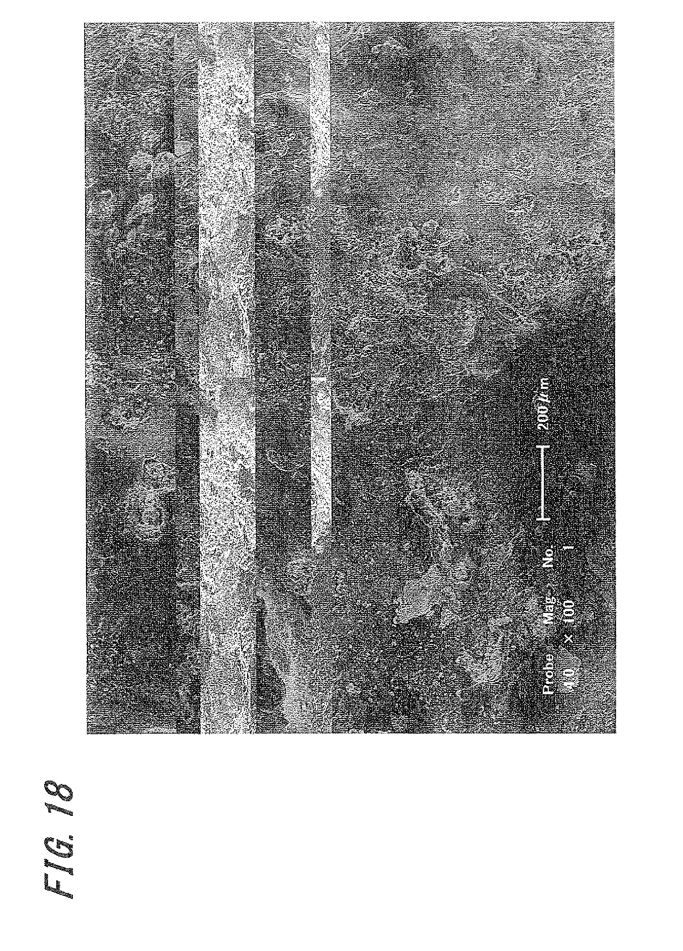

FIG. 18 is a magnified electron microscope photograph of the surface of an alloy of 50% of Al and 50% of Bi. The alloy is subjected to water cooling in FIG. 1(b) after melting in FIG. 1(a). Since the upper half of the image is disturbed during photographing using a scanning electron microscope, please see the well-photographed lower half of the image.
As shown in FIG. 18, dark places each having an area of about 100 to 500 square µm are dotted. These are holes formed by hydration in water cooling. The surface is roughened by hydration.

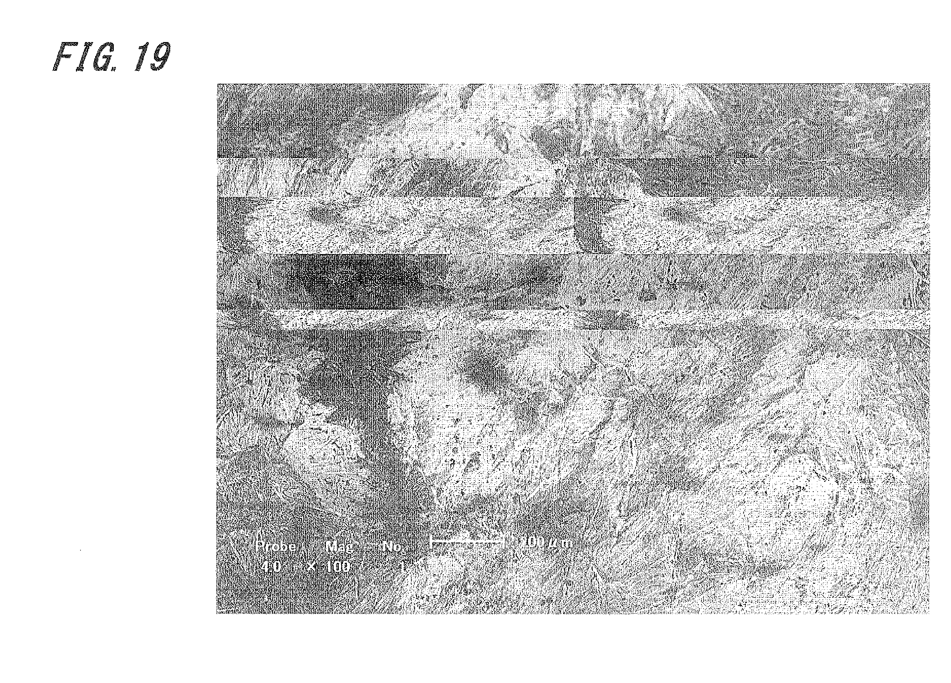

FIG. 19 is a magnified electron microscope photograph of the surface of an alloy of 50% of Al and 50% of Bi. The alloy is not subjected to water cooling in FIG. 1(b) but cooled in air after melting in FIG. 1(a). Since the upper half of the image is disturbed during photographing using a scanning electron microscope, please see the well-photographed lower half of the image.
It is found that the surface shown in FIG. 19 is less roughened than that in FIG. 18, since hydration due to water cooling may not occur.

### [2.5. Alloy of Mg and metal not forming solid solution with Mg]

FIG. 17 is further a graph representing the degree of reaction in alloys of Mg and various kinds of metals not forming a solid solution with Mg, which are prepared to have the same composition ratio, when in contact with water at different temperatures. With regard to the degree of reaction, there are roughly four classes of the amount of hydrogen gas generated per unit time. All alloys shown in the graph are subjected to water cooling in FIG. 1(b) after melting in FIG. 1(a).
The percentage of Mg may not be increased, since the safety of experiment should be ensured.
As is clear from FIG. 14, any of the alloys of 98% of Bi, 98% of Sn or 98% of Pb and Mg have suitable hydrogen generating properties.
It should be noted here that the alloy of 98% of Cd and 2% of Mg (not shown) may not be reacted even in hot water at 100°C.

### [3. Characteristics of hydrogen generating alloy]

The hydrogen generating alloy described above generates hydrogen gas when in contact with water.
Al is reacted with water to form aluminum hydroxide.
The metal forming an alloy with Al is changed to its hydroxide if it is a metal capable of forming a hydroxide, or remains in water if it is not such a metal. The aforementioned low-melting metal is a typical example and when reacted in hot water at 90°C or more, the low-melting metal is accumulated at the bottom in hot water after completion of the reaction.
Because the metal incapable of forming a hydroxide is separated in water in accordance with the progress of reaction and may be easily collected, the metal may be reused as a material for the hydrogen generating alloy.

The hydrogen generating alloy generated by the process for generating a hydrogen generating alloy as described above has the following significant characteristics as compared with a hydrogen generating alloy of the related art.
(1) The alloy is reacted only in contact with water at ordinary temperature and continuously generates hydrogen gas for a long time.
   It is not necessary to cut a material (see Patent Document 4) and use a large-scale apparatus (see Patent Document 1) for reaction.
   Hydrogen gas generation may be highly easily controlled, since the alloy is reacted in contact with water and the reaction is stopped by withdrawing the alloy from water.
(2) The alloy is highly stable in a normal state.
   Unlike a low-melting alloy itself (see Patent Document 5), the alloy is stable as a solid at normal temperature and is not reacted when it is not in contact with water. The alloy may be highly easily stored or transported, and it is not necessary to prevent the alloy from being in contact with air in storage or transportation. The alloy may be touched by hands without problems. However, it is necessary to take care of toxicity derived from the composition of the low-melting alloy or the like.
(3) The alloy is generated not as powder or a thin film but in the form of a solid mass.
   Because the molten alloy is in contact with water and rapidly cooled, the resulting alloy is shaped as a slightly distorted mass. That is, the alloy may not be powder or granules immediately after cooling.
   Therefore, generation of the alloy may not require a process such as scraping of powder, all that is needed during transportation or the like is to isolate the alloy from moisture, and the alloy may be highly easily handled.
(4) The reaction rate may be easily controlled based on the water temperature.
   For example, the reaction is vigorous in hot water at about 90°C, and the reaction is slow in water at 10°C or less.
(5) Once the alloy becomes porous, the alloy is reacted with water to generate hydrogen gas even if it is processed into powder or granules.
   That is, when hydration proceeds to make the alloy porous, hydrogen gas generating performance is not impaired even if the alloy is physically processed thereafter.

An experiment has been performed as follows to prove that moisture is required in the process of cooling the alloy.
The following is the results of cooling an alloy composed of a 90°C low-melting alloy and 90% of Al with water or a solvent other than water.
(1) The alloy cooled with engine oil generates hydrogen in water at normal temperature and is vigorously reacted in hot water at 100°C. However, the reaction does not continue.
(2) The alloy molten at about 700°C is covered with molten salt, and is cooled and solidified in a vessel without contact with air. The alloy also initially generates hydrogen to some extent. However, the reaction is immediately stopped.
(3) The alloy cooled with water, the alloy cooled with engine oil, and the alloy covered with common salt and cooled are reacted in hot water at 100°C for about five hours to examine the change in weight.
   The weight of the alloy cooled with water is reduced from 6.8 g to 0.3 g by 6.5 g.
   The weight of the alloy cooled with engine oil is reduced from 7.28 g to 3.89 g by 3.39 g.
   The weight of the alloy covered with common salt and cooled is unchanged from 22.34 g.
   The alloy cooled with engine oil becomes porous.

Further, the alloy composed of the 90°C low-melting alloy and 90% of Al and cooled with water (about 10 g) is placed in 300 cc of salad oil and heated with gas.
The alloy first generates a little amount of hydrogen at 30°C, is reacted somewhat more strongly at 50°C, is reacted still more actively at 65°C, and is reacted yet more actively at 75°C, but is reacted a little less actively at 90°C and is reacted still slightly less actively at 100°C. The overall elapsed time is 15 minutes. After maintaining the alloy at 100°C for about 10 minutes, hydrogen generation is stopped.
Accordingly, it is found that oil contains a considerable amount of moisture and the moisture is reacted with the hydrogen generating alloy.
Specifically, it is clear that the contact with moisture in the cooling process is an important factor determining durability and quality of reaction of the hydrogen generating alloy.

### [4. Applications]

Not only the aforementioned embodiment but also the following applications are possible.
(1) The water cooling as shown in FIG. 1(b) is necessary in the present embodiment. However, an alloy having a specific combination of metals generates hydrogen gas even if the alloy is not necessarily cooled with water. An example of the alloy is an alloy including a low-melting metal having a melting point of 100°C or less as a main component and about 10% or less of Al.
Depending on the composition of this kind of alloy, a hydrogen generating alloy may be industrially produced more safely, where it is not necessary to take into consideration the risk of treatment or the like of hydrogen gas generated during water cooling.

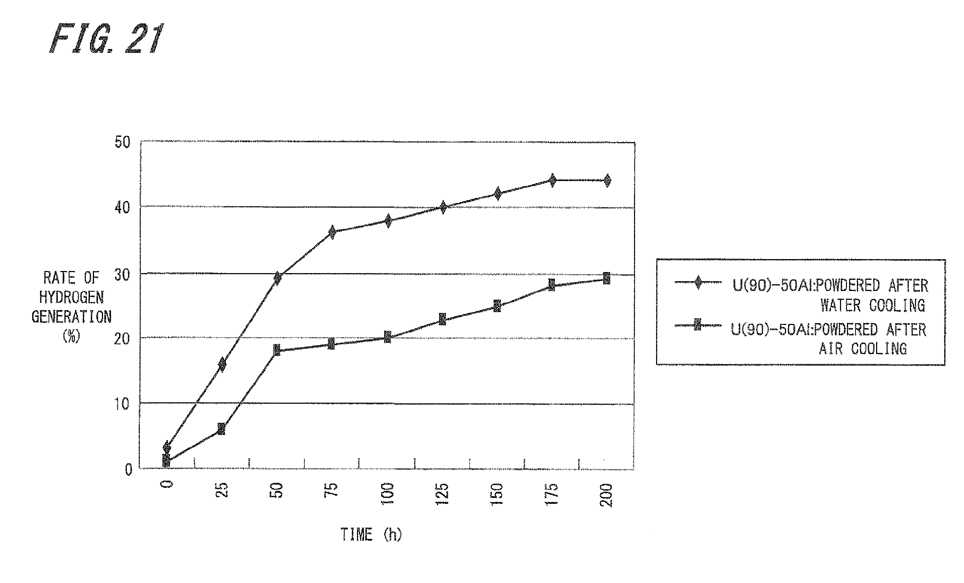

(2) When the alloy is formed and then cut into powder with a file or the like, instead of being cooled with water, the treated alloy generates a larger amount of hydrogen gas than the non-powdered one. However, although a large amount of hydrogen gas is generated for about one hour after the cutting treatment, the reaction rate is considerably decreased when the alloy is left to stand for one day after the cutting.

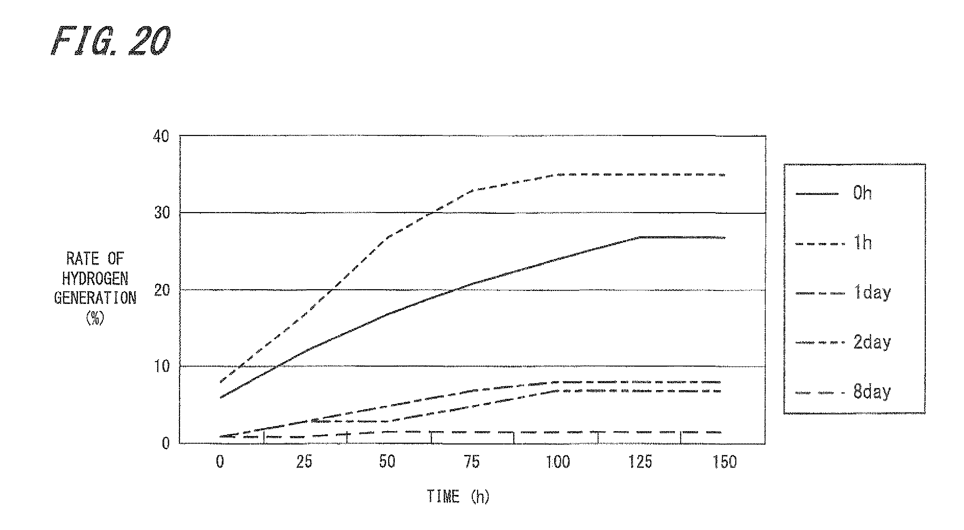

FIG. 20 is a graph showing the elapsed time and the change in the rate of hydrogen generation after making a hydrogen generating alloy composed of a 90°C low-melting alloy and aluminum into powder and then leaving the powder to stand for a predetermined time. The rate of hydrogen generation (reaction rate) of the hydrogen generating alloy air-cooled and then powdered by cutting is measured immediately after powdering (0 hour), one hour after powdering, one day after powdering and eight days after powdering, respectively. Water is set at 25°C as normal temperature. The reaction rate of the hydrogen generating alloy powder is highest one hour after powdering; however, the reaction rate is considerably decreased one day after powdering. The alloy is almost not reacted eight days after powdering.
The reaction rate is somewhat lower than that of the water-cooled alloy. FIG. 21 is a graph showing the elapsed time and the change in the rate of hydrogen generation in a hydrogen generating alloy composed of a 90°C low-melting alloy and aluminum which is air-cooled and powdered and such an alloy which is water-cooled and powdered. Water is set at 25°C as normal temperature. Air cooling is performed by casting the alloy in a die and leaving it to stand. The interval between the powdering and the start of reaction measurement is about one hour for both alloys. As shown in the graph, the difference in reaction rate is about 15%.

(3) In the present embodiment, the molten alloy is placed in a water tank in water cooling shown in FIG. 1(b). However, the water cooling is not necessarily limited to this method. A safer industrial method for producing a hydrogen generating alloy may be realized, where a blast furnace including a molten alloy is showered, for example, making it possible to reduce the risk of treatment or the like of hydrogen gas generated during water cooling.

(4) Water for hydrating the alloy may have any pH. The water may obviously be neutral water, and may also be an acidic aqueous solution or an alkaline aqueous solution.

Embodiments of the present invention have been described above. However, the present invention is not limited to the aforementioned embodiments, and obviously includes other variations and applications insofar as they do not depart from the gist of the present invention described in the claims.

### EXPLANATION OF REFERENCE NUMERALS

101 blast furnace, 103 aluminum, 104 another metal, 105 Al alloy, 106 water tank, 107 water

## Claims

1. A hydrogen generating method **characterized in that**
an alloy obtained by melting and solidifying:
a first metal containing one or more of Al, Zn and Mg; and
a second metal difficult to form a solid solution with the first metal, is allowed to be in contact with water.

2. The hydrogen generating method according to claim 1,
**characterized in that**
the second metal is a low-melting alloy having a melting point of 100°C or less.

3. The hydrogen generating method according to claim 1,
**characterized in that**
the second metal is composed of one or more metals of Ga, Cd, In, Sn, Sb, Hg, Pb and Bi.

4. A hydrogen generating alloy **characterized in that**
the alloy comprises:
a first metal containing one or more of Al, Zn and Mg; and
a second metal difficult to form a solid solution with the first metal, and
a hydroxide derived from the first metal and the second metal are exposed on the surface.

5. The hydrogen generating alloy according to claim 4,
**characterized in that**
the second metal is a low-melting alloy having a melting point of 100°C or less.

6. The hydrogen generating alloy according to claim 4,
**characterized in that**
the second metal is composed of one or more metals of Ga, Cd, In, Sn, Sb, Hg, Pb and Bi.

7. A method for producing a hydrogen generating alloy,
**characterized by**:
melting a first metal containing one or more of Al, Zn and Mg and a second metal difficult to form a solid solution with the metal at a temperature not lower than the melting point of the first metal; and
contacting the alloy with water to cool and solidify the alloy and form a hydroxide derived from the first metal on the surface.

8. The method for producing a hydrogen generating alloy according to claim 7, **characterized in that**
the second metal is a low-melting alloy having a melting point of 100°C or less.

9. The method for producing a hydrogen generating alloy according to claim 7, **characterized in that**
the second metal is composed of one or more metals of Ga, Cd, In, Sn, Sb, Hg, Pb and Bi.

## Amended claims

### Amended claims under Art. 19.1 PCT

**1.** (Amended) A hydrogen generating method **characterized by** comprising:
a first step of melting a first metal containing one or more of Al, Zn and Mg and a second metal difficult to form a solid solution with the first metal at a temperature not lower than the melting point of the first metal to obtain a molten alloy;
a second step of allowing the molten alloy formed by the first step to be in contact with water to cool and solidify the alloy and obtaining a solidified alloy having a surface on which a hydroxide derived from the first metal is formed; and
a third step of the solidified alloy being in contact with water to generate hydrogen.

**2.** (Amended) The hydrogen generating method according to claim 1, **characterized in that**
the second metal is composed of one or more metals of Ga, Cd, In, Sn, Sb, Hg, Pb and Bi.

**3.** (Amended) The hydrogen generating method according to claim 1, **characterized in that**
the second metal 1 is a low-melting alloy having a melting point of 100°C or less.

**4.** (Amended) A hydrogen generating alloy **characterized by** comprising:
an alloy main body composed of a first metal containing one or more of Al, Zn and Mg, and a second metal which is a low-melting alloy having a melting point of 100°C or less and being difficult to form a solid solution with the first metal; and
an alloy surface covering the alloy main body, including a hydroxide of the first metal, and having holes formed thereon by hydration of the first metal.

**5.** (Amended) A hydrogen generating alloy **characterized by** comprising:
an alloy main body composed of Al, Zn and a first metal difficult to form a solid solution with the Al and the Zn; and
an alloy surface covering the alloy main body, including a hydroxide of the Al and the Zn, and having holes formed thereon by hydration of the Al and the Zn.

**6.** (Amended) A hydrogen generating alloy **characterized by** comprising:
an alloy main body composed of Mg and a first metal difficult to form a solid solution with the Mg; and
an alloy surface covering the alloy main body, including a hydroxide of the Mg, and having holes formed thereon by hydration of the Mg.

**7.** (Amended) A method for producing a hydrogen generating alloy, **characterized by** comprising:
a first step of melting a first metal containing one or more of Al, Zn and Mg and a second metal difficult to form a solid solution with the first metal at a temperature not lower than the melting point of the first metal to obtain a molten alloy; and
a second step of allowing the molten alloy formed by the first step to be in contact with water to cool and solidify the alloy and obtaining a solidified alloy having a surface on which a hydroxide derived from the first metal is formed.

**8.** (Amended) The method for producing a hydrogen generating alloy according to claim 7, **characterized in that**
the second metal is composed of one or more metals of Ga, Cd, In, Sn, Sb, Hg, Pb and Bi.

**9.** (Amended) The method for producing a hydrogen generating alloy according to claim 7, **characterized in that**
the second metal is a low-melting alloy having a melting point of 100°C or less.

Statement under Art. 19.1 PCT
**1.** is amended to further clarify the gist of the present invention.

**2.** is amended to further clarify the gist of the present invention.

**3.** is amended to further clarify the gist of the present invention.

**4.** is amended to further clarify the gist of the present invention.

**5.** is amended to further clarify the gist of the present invention.

**6.** is amended to further clarify the gist of the present invention.

**7.** is amended to further clarify the gist of the present invention.

**8.** is amended to further clarify the gist of the present invention.

**9.** is amended to further clarify the gist of the present invention.
